# EUROPÄISCHE PATENTSCHRIFT

(11) **EP 0 745 422 B1**
(45) Veröffentlichungstag und Bekanntmachung des Hinweises auf die Patenterteilung: **09.08.2000**
(21) Anmeldenummer: 96107548.8
(22) Anmeldetag: 11.05.1996
(51) Int. Cl.: B01D 53/64

(54) **Verfahren zur Abscheidung von Quecksilber aus Verbrennungsabgasen**
Process for separating mercury from combustion gases
Procédé pour la séparation du mercure des gaz de combustion

(30) Priorität: 27.05.1995 DE 19519532
(43) Veröffentlichungstag der Anmeldung: 04.12.1996
(73) Patentinhaber: Metallgesellschaft Aktiengesellschaft, 60325 Frankfurt am Main (DE)
(72) Erfinder: Herden, Hans Jörg, Dr., 63110 Rodgau (DE); Mayer-Schwinning, Gernot, 61352 Bad Homburg (DE); Schaub, Georg, Dr., 61440 Oberursel (DE); Beisswenger, Hans, 65812 Bad Soden (DE)

(56) Entgegenhaltungen:
- DATABASE WPI Section Ch, Week 8240 Derwent Publications Ltd., London, GB; Class E36, AN 82-85315E XP002019369 & SU-A-886 955 (USOLE KHIMPROM) , 7.Dezember 1981

## Beschreibung

Die Erfindung bezieht sich auf ein Verfahren zur Abscheidung von Quecksilber aus Abgasen, die bei der Verbrennung von Müll, Klärschlamm und festen Brennstoffen anfallen.

Es ist bekannt, daß Verbrennungsabgase mit metallischem Quecksilber sowie mit Quecksilberverbindungen verunreinigt sind, wobei das metallische Quecksilber in den Abgasen dampfförmig vorliegt und wobei die Quecksilberverbindungen in den Abgasen zumindest teilweise dampfförmig vorliegen. Daher enthalten Verbrennungsabgase, die entstaubt sind, dampfförmiges Quecksilber und dampfförmige Quecksilberverbindungen. Diese Schadstoffe müssen nahezu quantitativ aus den Abgasen entfernt werden, da sowohl Quecksilber als auch Quecksilberverbindungen bereits in sehr geringen Mengen toxisch wirken. Zur Zeit ist nach den in der Bundesrepublik Deutschland geltenden gesetzlichen Bestimmungen in gereinigten Abgasen, die in die Atmosphäre abgegeben werden, ein Quecksilbergehalt von 50 µg/m³ zulässig, der sowohl das metallische Quecksilber als auch die Quecksilberverbindungen umfaßt.

Die Abscheidung von dampfförmigem metallischen Quecksilber bereitet erhebliche Probleme, denn es kann sowohl in einer sauren als auch in einer alkalischen Wäsche nicht nahezu quantitativ abgeschieden werden, so daß das metallische, dampfförmige Quecksilber nur durch einen zusätzlichen Verfahrensschritt, nämlich durch Adsorption an Aktivkohlen oder Zeolithen, sicher abgeschieden werden kann. Neben den hohen Kosten für die Adsorbentien entstehen bei diesem Verfahren quecksilberhaltige Reststoffe, die entsorgt werden müssen. Hingegen werden die Verbindungen des Quecksilbers, in denen es ein- oder zweiwertig vorliegt, insbesondere durch Waschprozesse nahezu quantitativ aus den Abgasen entfernt.

Der Erfindung liegt die Aufgabe zugrunde, ein Verfahren zur Abscheidung von Quecksilber aus Verbrennungsabgasen zu schaffen, mit dem insbesondere dampfförmiges, metallisches Quecksilber auch über einen sehr langen Zeitraum zuverlässig und nahezu quantitativ aus den Abgasen abgeschieden werden kann.

Die der Erfindung zugrundeliegende Aufgabe wird dadurch gelöst, daß die Abgase, die einen Sauerstoffgehalt von 1 bis 15 Vol.-% aufweisen, zunächst weitgehend entstaubt und danach bei 50 bis 80°C mit einer wäßrigen Lösung behandelt werden, die ein oder mehrere Fe(III)-Salze in einer Menge von insgesamt 2 bis 20 g/l und HCl in einer Menge von 0,2 bis 200 g/l enthält. Mit dem erfindungsgemäßen Verfahren ist es möglich, daß im gereinigten Abgas ein Quecksilbergehalt, der sowohl das metallische Quecksilber als auch die Quecksilberverbindungen erfaßt, von < 50 µg/m³ eingehalten werden kann. Dieser Wert wird bei 1000 Betriebsstunden keinesfalls überschritten.

Aus der SU-PS 886 955 ist ein Verfahren zur Abscheidung von dampfförmigem Quecksilber aus Gasen bekannt, bei dem das Quecksilber in einer wäßrigen Lösung absorbiert wird, die 9 bis 21 Gew.-% FeCl₃, 0,4 bis 0,8 Gew.-% FeCl₂, 5 bis 14 Gew.-% AlCl₃, 1 bis 3 Gew.-% HCl und 0,8 bis 2,2 Gew.-% SiO₂ enthält. Dieses Verfahren eignet sich jedoch nur zur Reinigung von inerten Gasen oder Wasserstoff bei Raumtemperatur. Nach dem erfindungsgemäßen Verfahren muß Quecksilber hingegen bei höheren Temperaturen aus einem sauerstoffhaltigen Abgas entfernt werden. Durch den Sauerstoff würde aber das beim bekannten Verfahren vorgesehene Absorptionsmittel, welches FeCl₂ enthält, oxidiert, so daß die nach dem bekannten Verfahren verwendete Absorptionslösung zur Reinigung von sauerstoffhaltigen Verbrennungsabgasen nicht geeignet erscheint. Es kommt hinzu, daß beim erfindungsgemäßen Verfahren Entstaubung und Quecksilber-Absorption miteinander kombiniert werden müssen, da der Gebrauch der Absorptionslösung durch den Staubgehalt des Abgases beeinträchtigt wird. Beim bekannten Verfahren ist eine Entstaubung nicht vorgesehen.

Nach der Erfindung ist es besonders vorteilhaft, wenn die Entstaubung der Abgase in mindestens einem elektrostatischen Abscheider erfolgt. Hierdurch wird erreicht, daß 90 bis 95 Gew.-% des im Abgas enthaltenen Staubs entfernt werden und daß der nach der Entstaubung im Abgas enthaltene Staub die Funktionsfähigkeit der Absorptionslösung über einen längeren Zeitraum nicht nachteilig beeinflußt.

Nach der Erfindung ist vorgesehen, daß als Fe(III)-Salze FeCl₃ und/oder Fe₂(SO₄)₃ verwendet werden. Diese beiden Salze des dreiwertigen Eisens haben sich zur Quecksilberabscheidung aus Verbrennungsabgasen besonders bewährt. In zweckmäßiger Ausgestaltung der Erfindung ist vorgesehen, daß zur Herstellung der wäßrigen Lösung ein Gemisch von Fe(III)-Salzen verwendet wird, das aus 70 bis 90 Gew.-% FeCl₃ und 10 bis 30 Gew.-% Fe₂(SO₄)₃ besteht. Eine wäßrige Lösung mit diesen Inhaltstoffen hat eine besonders hohe Standzeit.

In weiterer Ausgestaltung der Erfindung ist vorgesehen, daß die wäßrige Lösung neben Fe(III)-Salzen zusätzlich AlCl₃ in einer Menge von 0,2 bis 50 g/l enthält. Dieser Zusatz bewirkt insbesondere, daß auch das im Abgas enthaltene HF zuverlässig abgetrennt wird.

Nach der Erfindung ist ferner vorgesehen, daß die mit der wäßrigen Lösung behandelten Abgase anschließend mit einer sauren Waschflüssigkeit bei einem pH-Wert von 1 bis 0 gewaschen werden. Durch diesen dem Absorptionsprozeß nachgeschaltenen Waschprozeß wird erreicht, daß eventuell im Abgas suspendierte Tröpfchen der Absorptionslösung nahezu quantitativ abgeschieden werden. Der pH-Wert von 1 bis 0 wird in der Waschflüssigkeit durch Zugabe verdünnter Salzsäure und/oder durch die aus der Absorptionslösung ausgetragene Salzsäure eingestellt. Nach der Erfindung ist es zweckmäßig, wenn die saure Waschflüssigkeit, mit der die aus dem Absorptionsprozeß austretenden Abgase gewaschen werden, AlCl₃ in einer Menge von 0,2 bis 20 g/l enthält. Der Zusatz von AlCl₃ bewirkt insbesondere die quantitative Abtrennung von eventuell im Abgas enthaltenem HF.

Das erfindungsgemäße Verfahren kann im großtechnischen Maßstab besonders vorteilhaft durchgeführt werden, wenn die mit Quecksilber verunreinigten, sauerstoffhaltigen Abgase den elektrostatischen Abscheider mit einer Temperatur von 220 bis 350°C verlassen, danach mit der wäßrigen Fe(III)-Salz-Lösung gequencht sowie auf eine Temperatur von 50 bis 80°C abgekühlt werden und schließlich mit einer sauren Waschflüssigkeit bei einem pH-Wert von 1 bis 0 gewaschen werden. Es hat sich gezeigt, daß der im elektrostatischen Abscheider aus den Verbrennungsabgasen abgeschiedene Staub dann kein Quecksilber enthält, wenn der elektrostatische Abscheider bei einer Temperatur von 220 bis 350°C betrieben wird. Die Abkühlung der den elektrostatischen Abscheider verlassenden Abgase erfolgt vorteilhaft durch Quenchen mit der wäßrigen Fe(III)-Salz-Lösung, wobei in dieser Absorptionslösung eine Temperatur von 50 bis 80°C eingestellt wird und wobei das Abgas den Absorptionsprozeß mit einer Temperatur von 50 bis 80°C verläßt. Durch den nachgeschalteten Waschprozeß werden sowohl die im Abgas suspendierten Tröpfchen der Absorptionslösung als auch eventuell im Abgas vorhandene weitere Schadstoffe, insbesondere HF, abgetrennt.

Der Gegenstand der Erfindung wird nachfolgend anhand eines Verfahrensfließbildes und eines Ausführungsbeispiels näher erläutert.

Aus der Müllverbrennungsanlage (1), in der Haus- und Industriemüll verbrannt werden, gelangt das Verbrennungsabgas über die Leitung (2) in den elektrostatischen Abscheider (3). Das Verbrennungsabgas wird vor dem Eintritt in den elektrostatischen Abscheider (3) auf eine Temperatur von ca. 300°C abgekühlt. Die zur Abkühlung des Abgases erforderlichen Wärmeaustauscherflächen sind im Verfahrensfließbild nicht dargestellt. Die in der Müllverbrennungsanlage (1) anfallende Asche wird über die Leitung (24) ausgetragen. Der elektrostatische Abscheider, der mehrfeldrig ausgebildet sein kann, arbeitet bei einer Temperatur von ca. 300°C und hat eine Entstaubungsleistung von ca. 90 bis 95 %. Der im elektrostatischen Abscheider (3) anfallende Staub wird über die Leitung (25) abgeführt und kann, da er kein Quecksilber enthält, mit der in der Leitung (24) geführten Asche der Müllverbrennung vereinigt werden.

Das weitgehend entstaubte Verbrennungsabgas wird über die Leitung (4) in den Wäscher (5) geführt, der gleichzeitig als Quenche arbeitet. Die im Wäscher (5) befindliche Absorptionslösung wird über die Leitung (6) innerhalb eines internen Wäscherkreislaufs umgepumpt. Aus dem Vorratstank (9) wird über die Leitung (7) frische Absorptionslösung in die Leitung (6) gefördert, während dem Wäscher (5) über die Leitung (8) ein Teilstrom der Absorptionslösung entnommen wird. Dieser Teilstrom muß abgeführt werden, da sich die Absorptionslösung insbesondere mit Staub anreichert, und er wird im Reaktor (27) neutralisiert. Die in der Absorptionslösung gebildeten Quecksilbersalze werden durch Zugabe von Na₂S im Reaktor (27) gefällt. Der bei der Fällung entstehende Niederschlag enthält also sowohl das in der Absorptionslösung enthaltene Eisen als auch das abgeschiedene Quecksilber. Der Fällungsrückstand wird über die Leitung (28) abgeführt und auf einer Deponie für Sondermüll abgelagert. Dem Vorratstank (9) wird über die Leitung (16) ein Salzgemisch zugeführt, das zum einen aus 80 % FeCl₃ und 20 % Fe₂(SO₄)₃ sowie zum anderen aus AlCl₃ besteht. Ferner wird dem Vorratstank (9) über die Leitung (17) Wasser und über die Leitung (15) Salzsäure zugeführt. Im Vorratstank (9) wird die frische, wäßrige Absorptionslösung erzeugt, die über die Leitungen (7) und (6) in den Wäscher (5) gelangt. Die in der Leitung (15) geführte Salzsäure besteht aus frischer Salzsäure, die der Leitung (15) über die Leitung (26) aus dem Vorratstank (14) zugeführt wird, sowie aus einem Teilstrom der sauren Waschflüssigkeit, der dem Wäscher (11) entnommen wird. Der Wäscher (5) kann entweder einstufig oder mehrstufig gestaltet werden. Bei mehrstufiger Ausführung des Wäschers (5) wird eine Stufe als Quenche und die zweite Stufe als Füllkörperwäscher ausgebildet.

Das staub- und quecksilberfreie Abgas verläßt den Wäscher (5) über die Leitung (10) und tritt in den Wäscher (11) ein, in dem sich eine saure Waschflüssigkeit befindet, die über die Leitung (12) in einem internen Wäscherkreislauf umgepumpt wird. Die saure Waschflüssigkeit enthält neben Wasser HCl, die im Wäscher (11) aus dem Abgas ausgewaschen wird. Im Bedarfsfall wird zur Aufrechterhaltung des erfindungsgemäßen pH-Wertes verdünnte Salzsäure in den Wäscher (11) über die Leitung (30) eingebracht. Über die Leitung (30) gelangt auch eine wäßrige Lösung von AlCl₃ in den Wäscher (11). Dem Wäscher (11) wird ein Teilstrom der sauren Waschflüssigkeit über die Leitung (15) entnommen, während ein weiterer Teilstrom über die Leitung (13) in den Reaktor (29) gelangt, wo eine Neutralisation erfolgt.

Das Abgas verläßt den Wäscher (11) über die Leitung (18) und gelangt in den Wäscher (19), der mit einer alkalischen Waschlösung betrieben wird, die vorzugsweise Ca(OH)₂ enthält. Im Wäscher (19) wird das im Abgas enthaltene SO₂ nahezu quantitativ abgeschieden. Die im Wäscher (19) befindliche alkalische Waschlösung wird über die Leitung (20) in einem internen Wäscherkreislauf umgepumpt. Das gereinigte Abgas verläßt den Wäscher (19) über die Leitung (21). Ein Teilstrom der alkalischen Waschlösung fließt aus dem Wäscher (19) über die Leitung (22) ab und wird aufgearbeitet. Frische alkalische Waschlösung wird dem internen Wäscherkreislauf über die Leitung (23) zugeführt.

In der Absorptionslösung des Wäschers (5) wird das dampfförmige, metallische Quecksilber zu zweiwertigem Quecksilber oxidiert. Als Oxidationsmittel wirkt letztlich der in den Verbrennungsabgasen enthaltene Sauerstoff, während das dreiwertige Eisen offensichtlich quasi als Sauerstoffüberträger fungiert. Es wurde beobachtet, daß in einer Zwischenreaktion von Quecksilber und dreiwertigem Eisen zweiwertiges Quecksilber und zweiwertiges Eisen gebildet werden, wobei letzteres allerdings umgehend durch den in den Verbrennungsabgasen enthaltenen Sauerstoff wieder in dreiwertiges Eisen überführt wird, so daß in der Absorptionslösung immer nur Spuren von zweiwertigem Eisen nachweisbar sind. Die Abwesenheit von zweiwertigem Eisen in der Absorptionslösung hat den Vorteil, daß bei der Aufarbeitung der Absorptionslösung vergleichsweise wenig Neutralisationsarbeit geleistet werden muß, denn das dreiwertige Eisen kann bereits bei pH-Werten > 3 gefällt werden, während das zweiwertige Eisen erst bei einem wesentlichen geringeren pH-Wert ausfällt.

Das erfindungsgemäße Verfahren wird nachfolgend anhand eines Ausführungsbeispiels näher erläutert.

Zusammensetzung des in der Leitung (2) geführten Verbrennungsabgases:

| | |
|---|---|
| 79 Vol.-% N₂ | |
| 10 Vol.-% O₂ | |
| 11 Vol.-% CO₂ | |
| 105 - 130 g | H₂O/m³ |
| 500 - 2000 mg | HCl/m³ |
| 5 - 30 mg | HF/m³ |
| 200 - 1000 mg | SO₂/m³ |
| 150 - 300 µg | Hg (gesamt)/m³ |
| davon 10 - 150 µg | Hg⁰/m³ |
| 1 - 2 g | Staub/m³ |

Menge des in der Leitung (2) geführten
Verbrennungsabgases: 50000 m³/h

Staubgehalt des in der Leitung (4) geführten
Verbrennungsabgases: 10 - 50 mg/m³

Zusammensetzung der im Vorratstank (9) befindlichen
Absorptionslösung:

| |
|---|
| 10 - 15 g FeCl₃ und Fe₂(SO₄)₃/l |
| 20 - 40 g HCl/l |
| 20 - 40 g AlCl₃/l |

Zusammensetzung des in der Leitung (21) geführten Reingases:

| |
|---|
| < 50 µg Hg(gesamt)/m³ |
| davon 5 - 20 µg Hg⁰/m³ |
| 1 - 5 mg Staub/m³ |
| < 5 mg HCl/m³ |
| < 1 mg HF/m³ |
| < 20 mg SO₂/m³ |

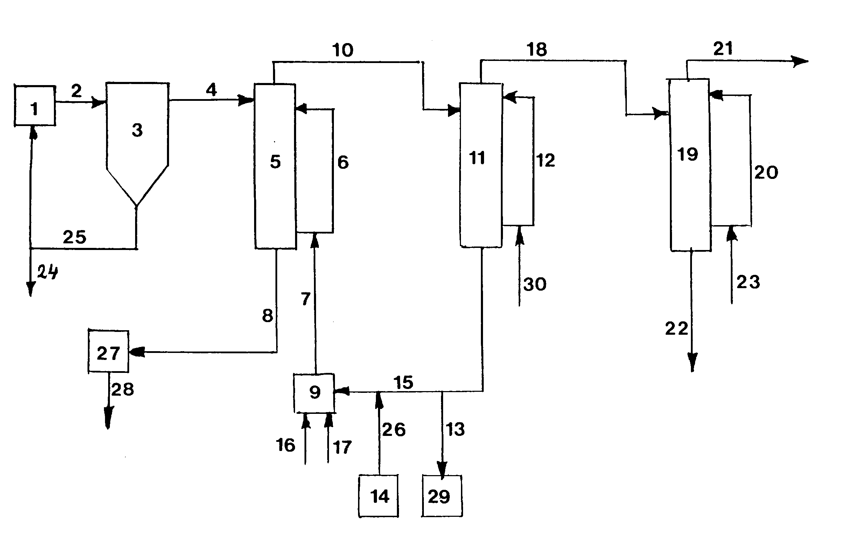

## Patentansprüche

1. Verfahren zur Abscheidung von Quecksilber aus Abgasen, die bei der Verbrennung von Müll, Klärschlamm und festen Brennstoffen anfallen, dadurch gekennzeichnet, daß die Abgase, die einen Sauerstoffgehalt von 1 bis 15 Vol.-% aufweisen, zunächst weitgehend entstaubt und danach bei 50 bis 80°C mit einer wäßrigen Lösung behandelt werden, die ein oder mehrere Fe(III)-Salze in einer Menge von insgesamt 2 bis 20 g/l und HCl in einer Menge von 0,2 bis 200 g/l enthält.

2. Verfahren nach Anspruch 1, dadurch gekennzeichnet, daß die Entstaubung der Abgase in mindestens einem elektrostatischen Abscheider erfolgt.

3. Verfahren nach den Ansprüchen 1 bis 2, dadurch gekennzeichnet, daß als Fe(III)-Salze FeCl₃ und/oder Fe₂(SO₄)₃ verwendet werden.

4. Verfahren nach Anspruch 3, dadurch gekennzeichnet, daß zur Herstellung der wäßrigen Lösung ein Gemisch von Fe(III)-Salzen verwendet wird, das aus 70 bis 90 Gew.-% FeCl₃ und 10 bis 30 Gew.-% Fe₂(SO₄)₃ besteht.

5. Verfahren nach den Ansprüchen 1 bis 4, dadurch gekennzeichnet, daß die wäßrige Lösung neben Fe(III)-Salzen zusätzlich AlCl₃ in einer Menge von 0,2 bis 50 g/l enthält.

6. Verfahren nach den Ansprüchen 1 bis 5, dadurch gekennzeichnet, daß die mit der wäßrigen Lösung behandelten Abgase anschließend mit einer sauren Waschflüssigkeit bei einem pH-Wert von 1 bis 0 gewaschen werden.

7. Verfahren nach Anspruch 6, dadurch gekennzeichnet, daß die saure Waschflüssigkeit AlCl₃ in einer Menge von 0,2 bis 20 g/l enthält.

8. Verfahren nach den Ansprüchen 1 bis 7, dadurch gekennzeichnet, daß die mit Quecksilber verunreinigten, sauerstoffhaltigen Abgase den elektrostatischen Abscheider mit einer Temperatur von 220 bis 350°C verlassen, danach mit der wäßrigen Fe(III)-Salz-Lösung gequencht sowie auf eine Temperatur von 50 bis 80°C abgekühlt werden und schließlich mit einer sauren Waschflüssigkeit bei einem pH-Wert von 1 bis 0 gewaschen werden.

## Claims

1. A process for separating off mercury from exhaust gases which are produced in the combustion of waste, clarification sludge and solid fuels, characterised in that the exhaust gases, which have an oxygen content of 1 to 15% by volume, first undergo extensive dust removal and then are treated at 50 to 80°C with an aqueous solution which contains one or more Fe(III) salts in a total quantity of 2 to 20 g/l and HCI in a quantity of 0.2 to 200 g/l.

2. A process according to Claim 1, characterised in that the removal of dust from the exhaust gases takes place in at least one electrostatic precipitator.

3. A process according to Claims 1 to 2, characterised in that FeCl₃ and/or Fe₂(SO₄)₃ are used as Fe(III) salts.

4. A process according to Claim 3, characterised in that a mixture of Fe(III) salts which consists of 70 to 90% by weight FeCl₃ and 10 to 30% by weight Fe₂(SO₄)₃ is used to produce the aqueous solution.

5. A process according to Claims 1 to 4, characterised in that the aqueous solution in addition to Fe(III) salts additionally contains AlCl₃ in a quantity from 0.2 to 50 g/l.

6. A process according to Claims 1 to 5, characterised in that the exhaust gases treated with the aqueous solution are then scrubbed with an acidic scrubbing liquid at a pH of 1 to 0.

7. A process according to Claim 6, characterised in that the acidic scrubbing liquid contains AlCl₃ in a quantity of 0.2 to 20 g/l.

8. A process according to Claims 1 to 7, characterised in that the oxygen-containing exhaust gases contaminated with mercury leave the electrostatic precipitator at a temperature of 220 to 350°C, then are quenched with the aqueous Fe(III) salt solution and are cooled to a temperature of 50 to 80°C, and finally are scrubbed with an acidic scrubbing liquid at a pH of 1 to 0.

## Revendications

1. Procédé de séparation du mercure d'effluents gazeux qui se produisent lors de la combustion des ordures, de boues de clarification et de combustibles solides, caractérisé en ce qu'il consiste à dépoussiérer d'abord dans une grande mesure les effluents gazeux qui ont une teneur en oxygène de 1 à 15 % en volume et ensuite à les traiter entre 50 et 80°C par une solution aqueuse qui renferme un sel de Fe(III) ou plusieurs sels de Fe(III) en une quantité représentant au total de 2 à 20 g/litre et de l'HCl en une quantité de 0,2 à 200 g/litre.

2. Procédé suivant la revendication 1, caractérisé en ce qu'il consiste à effectuer le dépoussiérage des effluents gazeux dans au moins un séparateur électrostatique.

3. Procédé suivant les revendications 1 à 2, caractérisé en ce qu'il consiste à utiliser comme sel de Fe(III), FeCl₃ et/ou Fe₂(SO₄)₃.

4. Procédé suivant la revendication 3, caractérisé en ce qu'il consiste à utiliser pour préparer la solution aqueuse un mélange de sels de Fe₃ constitué de 70 à 90 % en poids de FeCl₃ et de 10 à 30 % en poids de Fe₂(SO₄)₃.

5. Procédé suivant les revendications 1 à 4, caractérisé en ce que la solution aqueuse renferme, outre des sels de Fe(III), en plus AlCl₃ en une quantité de 0,2 à 50 g/litre.

6. Procédé suivant les revendications 1 à 5, caractérisé en ce qu'il consiste à laver ensuite les effluents gazeux traités par la solution aqueuse par un liquide de lavage acide à un pH de 1 à 0.

7. Procédé suivant la revendication 6, caractérisé en ce que le liquide de lavage acide renferme de l'AlCl₃ en une quantité de 0,2 à 20 g/litre.

8. Procédé suivant les revendications 1 à 7, caractérisé en ce que les effluents gazeux contenant de l'oxygène et épurés du mercure quittent le séparateur électrostatique en ayant une température de 220 à 350°C, puis sont refroidis par la solution aqueuse de sels de Fe(III) et ramenés à une température de 50 à 80°C et enfin lavés par un liquide de lavage acide à un pH de 1 à 0.
